# EUROPÄISCHE PATENTANMELDUNG

(11) **EP 3 059 584 A1**
(43) Veröffentlichungstag der Anmeldung: **24.08.2016**
(21) Anmeldenummer: 16155491.0
(22) Anmeldetag: 12.02.2016
(51) Int. Cl.: G01N 27/90, G01M 15/02

(54) **VERFAHREN ZUM DETEKTIEREN VON FEHLSTELLEN IN EINEM KOLBEN FÜR EINE BRENNKRAFTMASCHINE**

(30) Priorität: 20.02.2015 DE 102015203119
(71) Anmelder: Mahle International GmbH, 70376 Stuttgart (DE)
(72) Erfinder: MICHEL, Fritz, 99631 Weißensee/Thüringen (DE); MOOK, Gerhard, 39104 Magdeburg (DE); PAPADOPOULOS, Ioannis, 71364 Winnenden (DE); SCHNELL, Holger, 71665 Vaihingen (DE)
(74) Vertreter: BRP Renaud & Partner mbB Rechtsanwälte Patentanwälte Steuerberater

(57) **Zusammenfassung**

Die Erfindung betrifft ein Verfahren zum Detektieren von Fehlstellen in einem Kolben (3) für eine Brennkraftmaschine, umfassend die folgenden Schritte:
a) Bereitstellen des Kolbens (3) in einer Messanordnung (1), die eine, insbesondere adaptive, Messsonde (5) mit einem ersten elektrischen Spulenelement (6a) zum Erzeugen eines elektromagnetischen Wechselfeldes und einem zweiten elektrischen Spulenelement (6b) zum Detektieren eines elektromagnetischen Wechselfeldes umfasst,
b) Bewegen der Messsonde (5) über die Kolbenoberfläche (7) des Kolbens (3) hinweg, wobei in dem ersten Spulenelement (6a) ein elektrischer Wechselstrom (I₁) bereitgestellt wird, so dass ein elektromagnetisches Wechselfeld (13) erzeugt wird, welches mit dem Material des Kolbens (3) im Bereich unter der Kolbenoberfläche (7) wechselwirkt,
c) Auswerten der in dem zweiten Spulenelement (6b) vom elektromagnetischen Feld (18) nach Wechselwirkung mit dem Material des Kolbens (7) induzierten elektrischen Wechselspannung (U₂).

## Beschreibung

Die Erfindung betrifft ein Verfahren zum Detektieren von Fehlstellen in einem Kolben für eine Brennkraftmaschine. Die Erfindung betrifft ferner eine Mess-Anordnung zum Detektieren von Fehlstellen in einem Kolben für eine Brennkraftmaschine.

Kolben, die als bewegliches Bauteil in Brennkammern von Brennkraftmaschinen zum Einsatz kommen, sind hohen mechanischen und thermischen Belastungen ausgesetzt. Dies erfordert nahezu zwingend eine Herstellung besagter Kolben ohne sogenannte Fehlstellen, die sowohl Verschleißresistenz als auch die Lebensdauer des Kolbens erheblich mindern könnten. Dies gilt in besonderem Maße für Fehlstellen, die im Bereich des dem Fachmann als "Kolbenmulde" bekannten Kolbenbereichs auftreten, der den Brennraum der Brennkraftmaschine in der Bewegungsrichtung des Kolbens axial begrenzt.

Unter dem Begriff "Fehlstellen" seien dabei vorliegend jedwede Art von Rissen, Poren, Ausbrüchen usw. im Material des Kolbens verstanden. Da solche Fehlstellen zumeist intrinsisch, also unterhalb der Kolbenoberfläche, innerhalb des Kolbens entstehen, ist eine zerstörungsfreie Detektion - also die Detektion etwaig im Kolben vorhandener Fehlstellen - üblicherweise mit aufwändigen Nachweisverfahren verbunden. Solche herkömmlichen zerstörungsfreien Prüfverfahren basieren zumeist auf der Verwendung von Wirbelstrom-Sensoren. Diese Sensoren basieren auf der Detektion eines elektromagnetischen Feldes, das mit Hilfe einer Spule erzeugt wird, welche hierzu von einem elektrischen Wechselstrom durchströmt wird. Durch Wechselwirkung des elektromagnetischen Felds mit dem Material des Kolbens im Bereich der Kolbenoberfläche können von außen unsichtbare Fehlstellen detektiert werden, indem das elektromagnetische Feld nach dessen Wechselwirkung mit dem Kolbenmaterial analysiert wird.

Als nachteilig bei solchen herkömmlichen Prüfverfahren erweist sich, dass typischerweise in erheblichen Maße Störeinflüsse, z.B. der Abhebeeffekt zwischen Sensor und Kolbenoberfläche, komplizierte Apertureigenschaften der Sensoren sowie nur eine geringe Eindringtiefe des elektromagnetischen Feldes in die Kolbenoberfläche auftreten, was die Detektion gerade von Fehlstellen mit kleinen Abmessungen erschwert. Darüber hinaus ist nur die Erkennung von offenen Fehlstellen oder Fehlstellen in unmittelbarer Umgebung unterhalb der Kolbenoberfläche gewährleistet. Fehlstellen, die sich bereits wenige Zehntel-Millimeter unterhalb der Oberfläche des Kolbens ausgebildet haben, bleiben den Wirbelstrom-Sensoren hingegen normalerweise verborgen. Die Kornstruktur des Kolbengefüges führt in Verbindung mit der differenzierenden Wirkung der verwendeten Differenzsonden häufig zu einem erhöhten Gefüge-Rauschen im Wirbelstromsignal, das sich negativ auf die Fehler-Nachweisempfindlichkeit auswirkt.

Es ist daher Aufgabe der vorliegenden Erfindung, ein verbessertes zerstörungsfreies (Prüf-)Verfahren zu schaffen, welches insbesondere die Detektion von Fehlstellen im zu untersuchenden Kolben mit erhöhter Genauigkeit erlaubt. Es ist eine weitere Aufgabe der Erfindung, eine verbesserte (Prüf-)anordnung zur Durchführung eines solchen Verfahrens zu schaffen.

Diese Aufgaben werden durch den Gegenstand der unabhängigen Patentansprüche gelöst. Bevorzugte Ausführungsformen sind Gegenstand der abhängigen Patentansprüche.

Grundgedanke der Erfindung ist demnach, zur Untersuchung des Kolbenmaterials in einem oberflächennahen Bereich der Kolbenmulde des Kolbens eine zerstörungsfrei arbeitende Messsonde, insbesondere eine Wirbelstrom-Messonde, zu verwenden. Eine solche Messsonde umfasst ein erstes und ein zweites Spulenelement, die bei dem hier vorgestellten Verfahren Teil einer Messanordnung sind, in welcher der zu untersuchende Kolben aufgenommen werden kann. Durch elektrisches Bestromen mit einem elektrischen Wechselstrom wird vom ersten Spulenelement ein elektromagnetisches Feld erzeugt, welches bei geeigneter Platzierung der Spulenelemente oberflächennah zum Kolben in diesen eindringt und innerhalb des Kolbens mit dem Material des Kolbens wechselwirkt. Vom erfindungsgemäßen Verfahren wird ausgenutzt, dass diese Wechselwirkung von etwaig im Kolben vorhandenen Fehlstellen beeinflusst wird. Da ein Teil des in den Kolben eingedrungenen elektromagnetischen Feldes nach Wechselwirkung mit dem Kolbenmaterial wieder aus dem Kolben austritt, kann es dort vom zweiten Spulenelement detektiert werden. Dies geschieht bei dem hier vorgestellten Verfahren durch Auswertung der in dem zweiten Spulenelement vom elektromagnetischen Feld im zweiten Spulenelement induzierten elektrischen Wechselspannung. Hierzu kann das zweite Spulenelement eine geeignete Auswertungsvorrichtung umfassen, die die im zweiten Spulenelement induzierte elektrische Wechselspannung unter Verwendung eines herkömmlichen Spannungssensors komplexwertig zu erkennen und auszuwerten vermag.

Um verschiedene Bereiche des Kolbens auf das Vorhandensein von Fehlstellen hin untersuchen zu können, wird die Messsonde entlang eines vorbestimmten Messpfades im Abstand über die Oberfläche des Kolbens, insbesondere die Muldenoberfläche der Kolbenmulde, bewegt. Während des Bewegens wird das erste Spulenelement mit einem elektrischen Wechselstrom gespeist und damit ein mit dem Material des Kolbens im Bereich unter der Muldenoberfläche wechselwirkendes elektromagnetisches Feld erzeugt. Besagter elektrischer Wechselstrom kann dabei durch eine geeignete Stromquelle erzeugt werden, die wiederum von einer Steuerungseinrichtung, beispielsweise einem herkömmlichen Computersystem, angesteuert werden kann. Die Bewegung der Messsonde kann mit Hilfe einer geeigneten elektrischen Antriebseinheit erfolgen. Die Bewegung kann dabei entlang eines vorgegebenen Messpfades erfolgen, welcher bezüglich einer Draufsicht auf die Kolbenoberfläche meanderartig oder rasterartig verlaufen kann. Von erheblicher Bedeutung ist es dabei, den Abtastpfad derart festzulegen, dass alle zu untersuchenden Bereiche des Kolbens von der Messsonde lückenlos erfasst werden.

Aufbau und Funktionsweise der Antriebseinheit und der Aufnahmevorrichtung zur Aufnahme des Kolbens sind nicht Kern der hier diskutierten Erfindung und sollen daher im Folgenden nicht genauer erläutert werden, zumal geeignete Aufbauten dem einschlägigen Fachmann aus herkömmlichen Messaufbauten wie etwa den bereits erwähnten Wirbelstromsensoren in vielfältiger Form geläufig sind.

In einer bevorzugten Ausführungsform wird für die Durchführung des erfindungsgemäßen Verfahrens ein erstes Spulenelement bereitgestellt, das eine erste Wicklung aufweist. Die erste Wicklung kann eine mehrlagige Zylinderwicklung sein und trägerlos auf einem Mittelsteg eines schalenartigen Ferritkerns, dem Fachmann auch als "Ferrit-Schalenkern" oder "Ferrit-Topfkern" bekannt, angeordnet sein. Ein solcher Ferrit-Schalenkern bzw. Topfkern ist etwa aus der IEC-Norm 62317-2 bekannt. In analoger Weise zur ersten Wicklung wird für die Durchführung des Verfahrens ein zweites Spulenelement bereitgestellt, das eine zweite Wicklung aufweist. Auch die zweite Wicklung kann eine mehrlagige Zylinderwicklung sein und trägerlos auf einem Mittelsteg eines schalenartigen zweiten Ferritkerns angeordnet sein. Die offenen Stirnseiten der beiden schalenartig ausgebildeten Ferritkerne zeigen dabei in die gleiche Richtung zu der zu untersuchenden Kolbenoberfläche hin. Experimentelle Untersuchungen haben ergeben, dass die Verwendung dieser Schalenkerne die Empfindlichkeit der beiden Spulenelemente gegenüber äußeren elektromagnetischen Störsignalen verringert, die Empfindlichkeit des Messsignals gegenüber Schwankungen des Abstandes Messsonde - Kolbenoberfläche verringert und eine höhere Nachweistiefe für die Fehlstellen erreicht wird. Die vorgeschlagene Verwendung der Schalenkerne in Halbtransmissionsanordnung - jeweils nebeneinander angeordnete Einzelschalen - führt also im Ergebnis zu einer verbesserten Nachweisempfindlichkeit für Fehlstellen.

Besonders zweckmäßig werden die beiden Spulenelemente in einem Abstand zur Muldenoberfläche über diese hinweg bewegt werden, wobei dieser vorbestimmte Abstand vorzugsweise wenigstens 0,1 mm beträgt. Die beim erfindungsgemäßen Verfahren verwendete Messsonde mit zwei Spulenelementen macht es also nicht erforderlich, zur Detektion eines aus dem Kolben austretenden elektromagnetischen Feldes die verwendete Sensorik extrem nah an die Kolbenoberfläche heranzuführen, wie dies bei Verwendung herkömmlicher Wirbelstromsensoren erforderlich wäre. Dies vereinfacht den konstruktiven Aufbau der Mess-Anordnung erheblich, was insbesondere für den Bewegungsmechanismus zum Bewegen der Messsonde entlang des Messpfades zutrifft. Auch die Gefahr einer Beschädigung der Sensoren durch einen unerwünschten Kontakt mit der Oberfläche des zu untersuchenden Kolbens kann auf diese Weise minimiert werden.

In einer anderen bevorzugten Ausführungsform erfolgt das Bewegen der Messsonde gemäß Schritt b) unter Verwendung eines geeigneten Bewegungsmechanismus' entlang eines vorbestimmten Messpfads. Besonders bevorzugt kann der vorbestimmte Abtast- bzw. Messpfad dabei bezüglich einer Draufsicht auf die Muldenoberfläche eine meanderartige Gestalt aufweisen. In Varianten sind auch anders gewählte Messpfade möglich. Entscheidend ist dabei, dass unabhängig von der Form des gewählten Abtastpfades alle zu untersuchenden Oberflächenbereiche des Kolbens auch von der Messsonde erfasst werden.

In einer vorteilhaften Weiterbildung der Erfindung wird der Abstand der beiden Spulenelemente zueinander während der Durchführung des Verfahrens variiert. Alternativ oder zusätzlich kann während der Durchführung des Verfahrens auch ein Verkippungswinkel der beiden elektrischen Spulenelemente zueinander variiert werden. Durch Variation des Abstands zwischen den Spulenelementen lassen sich die Position und die Schärfe des sogenannten Fokus der Mess-Sonde, im Bereich dessen die Mess-Sonde hinsichtlich der Detektion von Fehlstehlen die höchste Empfindlichkeit besitzt, variieren. Besonders bevorzugt wird die Position des Fokus in einer Richtung senkrecht zur Kolbenoberfläche variieren, so dass auf diese Weise Fehlstellen in unterschiedlichen Tiefenbereichen unterhalb der Oberfläche des Kolbens erkannt werden können. Auch durch eine Verkippung der beiden Spulenelemente können, ebenso wie durch oben erläutertes Verändern des Abstands der Spulenelemente zueinander, die Lage und die Schärfe des Fokus der Mess-Anordnung variiert werden. Hinsichtlich der konkreten Durchführung der Abstandsvariation bzw. der Variation der Verkippung eröffnen sich dem Fachmann verschiedene Ausgestaltungsmöglichkeiten. Denkbar ist es etwa, die Verkippung bzw. den Abstand simultan zur Bewegung der Messsonde über die Kolbenoberfläche hinweg zu variieren. Alternativ dazu kann die Messsonden-Bewegung während der Abstands- bzw. Kippvariation angehalten werden. Schließlich kann auch daran gedacht sein, die Bewegung des Kolbens über die Kolbenoberfläche hinweg mit verschiedenen Spulenabständen und/oder Verkippungswinkeln zu wiederholen. Letztendlich ist auch eine parallele Anordnung mehrerer Spulenelementpaare mit jeweils variiertem gegenseitigen Abstand und/oder Kippwinkel mit unterschiedlicher Nachweis-Spezifik denkbar.

Die Erfindung betrifft weiterhin eine Mess-Anordnung zum Detektieren von Fehlstellen in einem Kolben für eine Brennkraftmaschine, insbesondere unter Durchführung des vorangehend vorgestellten Verfahrens. Eine erfindungsgemäße Mess-Anordnung umfasst dabei eine Aufnahmeeinrichtung, in welcher der Kolben zur Durchführung der Fehlstellen-Detektion aufgenommen werden kann. Die Aufnahmevorrichtung kann dabei in der Art eines Greifers ausgestaltet sein, in welchem der zu untersuchende Kolben fixiert wird, oder als Proben-Tisch realisiert sein, auf welchem der Kolben angeordnet wird. Hinsichtlich der konstruktiven Realisierung der Aufnahmevorrichtung eröffnen sich dem Fachmann vielfältige Optionen.

Erfindungswesentlich ist in der Mess-Anordnung eine Messsonde vorgesehen, die ein erstes sowie ein zweites, benachbart zum ersten Spulenelement angeordnetes zweites elektrisches Spulenelement zum Erzeugen unbzw.d Detektieren elektromagnetischer Wechselfelder umfasst. Das erste Spulenelement ist dabei in einem vorbestimmten, insbesondere verstellbaren, Spulenabstand benachbart zum zweiten Spulenelement angeordnet. Die Messsonde der Mess-Anordnung ist mit Hilfe einer geeigneten, vorzugsweise elektrischen, Antriebseinheit in einem vorbestimmten Abstand über die auf Fehlstellen hin zu untersuchende Oberfläche des Kolbens bewegbar, wenn sich der Kolben in einem in der Aufnahmevorrichtung aufgenommenen Zustand befindet. Diese Bewegung erfolgt entlang eines vorbestimmten Abtast- oder Messpfads, der in einer mit der Antriebseinheit zusammenwirkenden Steuerungseinheit abgespeichert sein kann.

Besagte Antriebseinheit kann eine elektrische Antriebseinheit, etwa auf Basis eines elektrischen Motors, insbesondere eines elektrischen Schrittmotors, sein und einen Bewegungsmechanismus umfassen, mittels welchem sichergestellt wird, dass der gewählte Abstand bei der Bewegung entlang des Messpfads eingehalten wird, auch wenn die Kolbenoberfläche in dem zu untersuchenden Bereich eine nicht-ebene Oberflächenkontur besitzt.

Erfindungsgemäß umfasst das erste Spulenelement eine erste Wicklung, die an einem ersten Schalenelement des ersten Spulenelements vorhanden ist. In analoger Weise umfasst das zweite Spulenelement eine zweite Wicklung, die an einem zweiten Schalenelement des zweiten Spulenelements vorhanden ist. Durch elektrisches Bestromen mit einem elektrischen Wechselstrom wird vom ersten Spulenelement ein elektromagnetisches Feld erzeugt, welches bei Platzierung der Spulenelemente oberflächennah zum Kolben in diesen eindringt und innerhalb des Kolbens mit dem Material des Kolbens wechselwirkt. Diese Wechselwirkung wird von im Kolben vorhandenen Fehlstellen beeinflusst. Derjenige Teil des in den Kolben eingedrungenen elektromagnetischen Feldes, welcher nach einer solchen Wechselwirkung mit dem Kolbenmaterial wieder aus dem Kolben austritt, kann dort vom zweiten Spulenelement detektiert werden. Eine solche Auswertung kann etwa in Form einer Analyse der im zweiten Spulenelement vom elektromagnetischen Feld induzierten elektrischen Wechselspannung erfolgen. Hierzu kann das zweite Spulenelement mit einer geeigneten Auswertungsvorrichtung zusammenwirken, die die im zweiten Spulenelement induzierte elektrische Wechselspannung unter Verwendung eines herkömmlichen Spannungssensors komplexwertig detektiert und auswertet.

Um verschiedene Bereiche des Kolbens auf das Vorhandensein von Fehlstellen hin untersuchen zu können, kann die Messsonde entlang eines vorbestimmten Messpfades im Abstand über die Oberfläche des Kolbens, insbesondere die Muldenoberfläche der Kolbenmulde, bewegt werden. Während des Bewegens wird in das erste Spulenelement besagter erster elektrischer Wechselstrom eingespeist, was wiederum ein mit dem Material des Kolbens im Bereich unter der Muldenoberfläche wechselwirkendes elektromagnetisches Feld erzeugt. Der elektrische Wechselstrom kann dabei mittels einer geeigneten Stromquelle bereitgestellt werden, die von einer Steuerungseinrichtung, beispielsweise einem herkömmlichen Computersystem, angesteuert wird. Die Bewegung der Messsonde kann mit Hilfe einer geeigneten, beispielweise elektrischen Antriebseinheit erfolgen. Die Bewegung kann dabei entlang eines vorgegebenen Messpfades erfolgen, welcher bezüglich einer Draufsicht auf die Kolbenoberfläche eine meanderartige oder rasterartige Geometrie aufweist. Von erheblicher Bedeutung ist dabei, den Messpfad derart festzulegen, dass alle zu untersuchenden Bereiche des Kolbens vom "Sichtfeld" der Messsonde lückenlos erfasst werden.

Wesentlich ist auch die Verwendung von jeweils schalen- oder topfförmigen Ferritkernen oder geometrieähnlichen Kern-Anordnungen, z.B. Ferrit-Zylinderkernen mit zusätzlicher koaxial umgebender Ferrithülse oder Ferrit-E-Kerne in den beiden Spulenelementen der Mess-Anordnung. Durch die magnetische Abschirm-Wirkung der Ferritkern-Anordnungen kann die Anfälligkeit der beiden Spulenelemente gegenüber externen elektromagnetischen Störfeldern signifikant verringert werden. Gleichzeitig kann bei der Konstruktion der Mess-Anordnung der Fokus des mit dem zu prüfenden Kolben wechselwirkenden elektromagnetischen Feldes so ausgeprägt werden, dass der Einfluss von Änderungen des Abstandes für einen bestimmten Nennabstand minimiert wird und/oder sich die Wechselwirkung-Tiefe des elektromagnetischen Feldes in das Kolbenmaterial hinein erhöht. Somit können Fehlstellen in tieferen Bereichen unter der Kolbenoberfläche detektiert werden, als dies mit herkömmlichen Wirbelstromsensoren möglich wäre. Die erfindungsgemäße Mess-Anordnung erlaubt die Detektion von Fehlstellen mit sehr geringen Abmessungen, insbesondere von Fehlstellen, die einen Durchmesser von weniger als 0,3 mm aufweisen.

Besonders zweckmäßig kann sich die erste Wicklung als mehrlagige Zylinderwicklung entlang einer ersten axialen Richtung erstrecken und sich die zweite Wicklung ebenfalls als mehrlagige Zylinderwicklung entlang einer zweiten axialen Richtung erstrecken. In dieser Ausführungsform sind die beiden Spulenelemente benachbart und verkippt zueinander angeordnet, so dass die axiale erste Richtung mit der zweiten axialen Richtung einen vorbestimmten Verkippungswinkel ausbildet.

Besonders bevorzugt kann der Verkippungswinkel ein spitzer Winkel sein, der vorzugsweise zwischen 0° und 45° betragen.

Besonders zweckmäßig können die Spulenelemente, insbesondere lösbar, in einem jeweiligen Halteelement aufgenommen sein. In dieser Variante sind die beiden Haltelemente, vorzugsweise mittels einer Kipp- und/oder Verstellvorrichtung, zueinander linearverstellbar und/oder zueinander verkippbar ausgebildet. Dies gestattet es auf einfache Weise, den Abstand zwischen den Spulenelementen und/oder deren Verkippungswinkel zueinander zu variieren. Auf diese Weise können Lage und Charakteristik des Fokalpunkts der Messsonde besonders genau eingestellt werden.

In einer besonders bevorzugten Ausführungsform, die mit besonders geringem konstruktivem Aufwand realisiert werden kann, sind die beiden Haltelemente linearverstellbar an einem gemeinsamen Grundkörper der Messsonde angebracht.

In einer anderen bevorzugten Ausführungsform umfasst jedes der beiden Spulenelemente ein Schalenelement mit einem zylindrisch ausgebildeten Basisteil. Vom Basisteil steht ein erstes zylindrisches Ferritkern-Element ab, dessen Mittellängsachse koaxial zur Mittellängsachse des Basisteils verläuft und auf dessen Außenumfangsfläche die jeweilige Wicklung angeordnet ist. Vom zylindrischen Basisteil steht ferner ein hohlzylindrisch ausgebildetes zweites Ferritkern-Element ab, welches folglich in einem Querschnitt quer zur Mittellängsachse ringförmig ausgebildet ist. Die Mittellängsachse des zweiten Ferritkern-Elements verläuft ebenfalls koaxial zur Mittellängsachse des Basisteils und ist radial außerhalb des ersten Ferritkern-Elements angeordnet, so dass zwischen dem ersten und dem zweiten Ferritkern-Element ein Zwischenraum ausgebildet ist. Dieser Zwischenraum wird also in radialer Richtung radial innen von der Außenumfangsseite des ersten Ferritkern-Elements und radial außen von der Innenumfangsseite des zweiten Ferritkern-Elements begrenzt. Stirnseitig wird der Zwischenraum vom Basisteil begrenzt. Gegenüber der Stirnseite ist der Zwischenraum hingegen offen.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:
- Fig. 1: ein Beispiel einer erfindungsgemäßen Mess-Anordnung zur Bestimmung von Fehlstellen in einem Kolben für ein Kraftfahrzeug,
- Fig. 2: eine Detaildarstellung der Mess-Anordnung der Figur 1 im Bereich zwischen einer Messsonde der Mess-Anordnung und der Kolbenoberfläche des zu untersuchenden Kolbens,
- Fig. 3: eine geschnittene Detaildarstellung der Messsonde der Figur 2 im Bereich der elektrischen Spulenelemente der Messsonde,
- Fig. 4: eine Detaildarstellung eines der beiden elektrischen Spulenelemente der Figur 3,
- Fig. 5: das Spulenelement der Figur 4 in einem Querschnitt entlang der Schnittlinie V-V der Figur 4.
- Fig. 6: eine Variante des Beispiels der Figur 3 mit zueinander verkippten elektrischen Spulenelementen.

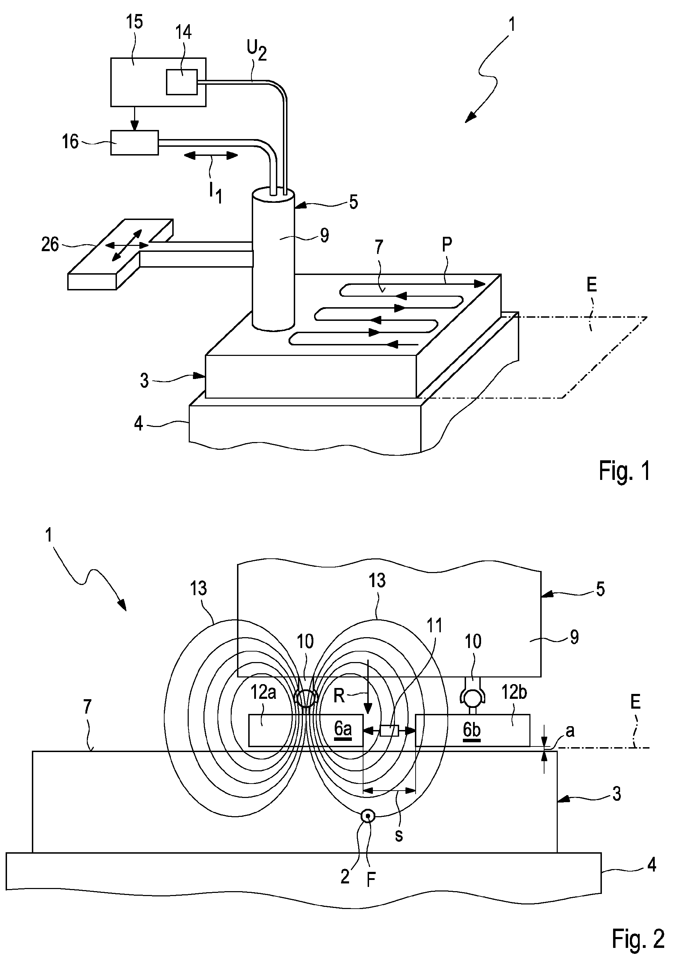

Figur 1 zeigt in schematischer Darstellung ein Beispiel einer erfindungsgemäßen Mess-Anordnung 1 zum Detektieren von Fehlstellen 2 in einem Kolben 3 - in Figur 1 nur grobschematisch dargestellt - für eine Brennkraftmaschine. Die Mess-Anordnung 1 eignet sich insbesondere zur Durchführung des oben diskutierten, erfindungsgemäßen Verfahrens. Die Mess-Anordnung 1 umfasst eine Aufnahmeeinrichtung 4 zur Aufnahme des Kolbens 3. Diese kann in der Art einer Greifvorrichtung oder, wie in Figur 1 grobschematisch angedeutet, in der Art eines Proben-Tisches ausgebildet sein. Die Mess-Anordnung 1 umfasst ferner eine in Figur 1 ebenfalls nur grobschematisch skizzierte Messsonde 5, die wiederum ein erstes und ein zweites Spulenelement 6a, 6b zum Erzeugen und Detektieren eines elektromagnetischen Wechselfeldes aufweist.

Die Figur 2 zeigt die Mess-Anordnung 1 im Bereich der Messsonde 5. Man erkennt, dass das erste Spulenelement 6a lateral, also in einer zur Kolbenoberfläche 7 parallelen Messebene E, in einem vorbestimmten Spulenabstand s zum zweiten Spulenelement 6b angeordnet ist. Dabei ist die Messsonde 5 mittels einer Antriebseinheit 26 in einem vorbestimmten Abstand a zur Kolbenoberfläche des Kolbens entlang eines vorbestimmten Messpfads P - schematisch skizziert in Figur 1 - über die Kolbenoberfläche 7 hinweg bewegbar. Der genaue konstruktive Aufbau der Antriebseinheit 26 ist nicht zentraler Gegenstand der hier vorgestellten Erfindung, so dass auf detaillierte Erläuterungen verzichtet wird; dem Fachmann sind vielfältige Ausgestaltungsformen bekannt unter welchen er aus praktischen Erwägungen heraus wählen kann. Denkbar ist insbesondere eine scannerartig aufgebaute Anordnung in Verbindung mit einem oder mehreren elektrischen Schrittmotoren, um die Messsonde 5 relativ zum Kolben 3 entlang des Messpfades P zu bewegen.

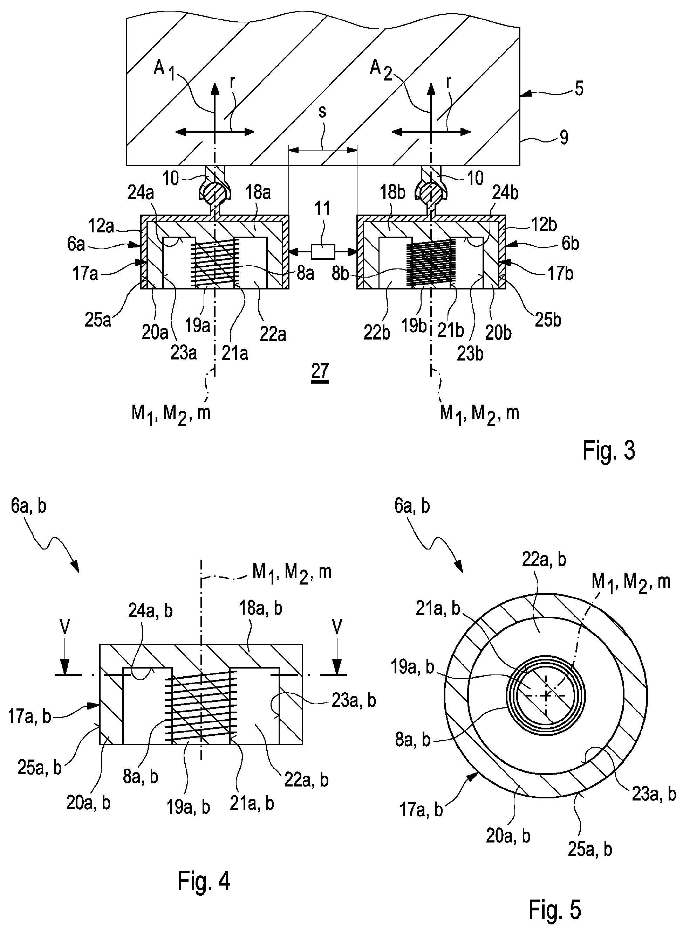

In Figur 3 ist der Aufbau der Messsonde 5 in einer Detaildarstellung im Bereich der beiden Spulenelemente 6a, 6b dargestellt. Entsprechend Figur 3 besitzt das erste Spulenelement 6a eine Wicklung 8a, die auf einem schalenartig ausgebildeten ersten Schalenelement 17a des ersten Spulenelements 6a angeordnet ist. Entsprechend besitzt das zweite Spulenelement 6b eine zweite Wicklung 8b, die in analoger Weise zum ersten Spulenelement 6a auf einem schalenartig ausgebildeten zweiten Schalenelement 17b des zweiten Spulenelements 6b angeordnet ist. Die erste Wicklung 8a kann zur Bereitstellung einer Induktivität von 2,5 µH beispielsweise zwanzig Windungen aufweisen. Die erste Wicklung 8b kann zur Bereitstellung einer Induktivität von 250 µH ca. 240 Windungen aufweisen.

Durch elektrisches Bestromen mit einem elektrischen Wechselstrom I₁ wird vom ersten Spulenelement 6a ein elektromagnetisches Feld 13 erzeugt, welches durch die Kolbenoberfläche 7 hindurch in das Innere des Kolbens 3 eindringt und innerhalb des Kolbens 7 mit dem Kolbenmaterial wechselwirkt. Diese Wechselwirkung wird - falls vorhanden - von der Fehlstelle 2 beeinflusst. Der elektrische Wechselstrom I₁ kann dabei durch eine geeignete, steuerbare elektrische Stromquelle 16 erzeugt werden, die dann von einer Steuerungseinrichtung 15, beispielsweise einem herkömmlichen Computersystem, angesteuert wird (vgl. Fig. 1). Der elektrische Wechselstrom I1 kann beispielsweise eine maximale Amplitude von 100mA bei einer Frequenz zwischen 50 und 200 kHz aufweisen.

Der nach Wechselwirkung mit dem Kolbenmaterial wieder aus dem Kolben 3 austretende Teil des elektromagnetischen Feldes 13 wird vom zweiten Spulenelement 6b detektiert, indem in diesem Spulenelement 6b eine elektrische Wechselspannung U₂ induziert und ausgewertet wird. Hierzu kann das zweite Spulenelement 6b mit einer geeigneten Auswertungsvorrichtung 14 in der Art eines Computersystems zusammenwirken, die beispielsweise die elektrische Wechselspannung U₂ komplexwertig detektiert. Dem Fachmann ist dabei klar, dass die Steuerungseinrichtung 15 zum Steuern der elektrischen Stromquelle 16 und die Auswertungseinrichtung 14 ineinander integriert sein können.

Um verschiedene Bereiche des Kolbens 3 auf das Vorhandensein von Fehlstellen 2 hin untersuchen zu können, wird die Messsonde 5 entlang eines vorbestimmten Messpfades P im Abstand a über die Kolbenoberfläche 7 des Kolbens 3, insbesondere die Muldenoberfläche der Kolbenmulde (nicht gezeigt), bewegt. Während des Bewegens wird das erste Spulenelement 6a mit dem elektrischen Wechselstrom I₁ gespeist, was das mit dem Material des Kolbens 3 im Bereich unter der Kolbenoberfläche 7 wechselwirkende elektromagnetische Feld 13 erzeugt. Die Bewegung der Messsonde 5 erfolgt mit Hilfe der bereits erwähnten Antriebseinheit 26. Die Bewegung der Messsonde 5 erfolgt entlang des Messpfades P, welcher bezüglich der Draufsicht auf die Kolbenoberfläche 7 meanderartig (vgl. Fig. 1) oder rasterartig (nicht gezeigt) verläuft. Auch andere Messpfad-Geometrien sind in Varianten denkbar. Der Messpfad P ist bei all diesen Varianten vorzugsweise derart festgelegt, dass alle zu untersuchenden Bereiche des Kolbens 3 vom "Messfeld" der Messsonde 5 erfasst werden.

Wie Figur 3 weiter erkennen lässt, können die beiden Spulenelemente 6a, 6b als separate Bauteile ausgebildet sein. Jedes Spulenelement 6a, 6b ist in einem jeweiligen Halteelement 12a, 12b aufgenommen. Die beiden Halteelemente 12a, 12b sind zueinander linearverstellbar und/oder zueinander verkippbar ausgebildet. Hierzu dient eine in Figur 3 nur schematisch angedeutete Verstell- und/oder /Kippvorrichtung 11, welche die beiden Haltelemente 12a, 12b miteinander verbindet. Auf diese Weise sind der Abstand s zwischen den Spulenelementen 6a, 6b und deren Verkippungswinkel α zueinander variierbar.

Durch Variation des Spulenabstands s lässt sich die Position des Fokus der Messsonde 5 - in Figur 2 schematisch angedeutet und mit F bezeichnet - in einer Richtung R senkrecht zur Kolbenoberfläche 7 variieren, im Bereich dessen die Messsonde hinsichtlich der Detektion von Fehlstehlen die höchste Empfindlichkeit besitzt. Auf diese Weise können Fehlstellen in unterschiedlichen Tiefenbereichen unterhalb der Kolbenoberfläche 7 des Kolbens 3 detektiert werden. Analog zur Variation des Abstands s kann auch durch eine Verkippung der beiden Spulenelemente 6a, 6b zueinander die Lage des Fokus F in der Richtung R senkrecht zur Kolbenoberfläche 7 variiert werden.

Zusätzlich können die beiden Halteelemente 12a, 12b linearverstellbar zu einem Grundkörper 9 der Messsonde 5 an diesem angebracht sein. Dies kann mittels eines Schlittens 10 geschehen. Dies erlaubt es, die Haltelemente 12a, 12b quer zum Grundkörper 9 zu verstellen. Eine solche Querbewegung kann erforderlich sein, da die zu untersuchenden Kolbenmulde des Kolbens 3 einen Hinterschnitt aufweist. Die Halteelemente 12a, 12b können lösbar am Grundkörper 9 befestigt sein. Eine lösbare Befestigung der beiden Spulenelemente 6a, 6b aneinander und/oder am Grundkörper 9 erleichtert den Zusammenbau der Messanordnung 1, wenn der räumlich nur schwer zugängliche Bereich einer Kolbenmulde des zu untersuchenden Kolbens 3 auf Fehlstellen hin untersucht werden soll.

Entsprechend der Figur 3 erstreckt sich die erste Wicklung 8a zylinderförmig entlang einer ersten axialen Richtung A₁. In analoger Weise erstreckt sich die zweite Wicklung 8b zylinderförmig entlang einer zweiten axialen Richtung A₂. Wie Figur 3 anschaulich belegt, sind die beiden Spulenelemente 6a, 6b in der lateralen Messebene E benachbart zueinander und bezüglich der beiden Richtungen A₁, A₂ parallel, also nicht verkippt zueinander, angeordnet.

Die Spulenelemente 6a, 6b weisen in einer Richtung quer zur axialen Richtung A₁, A₂ einen Durchmesser von ca. 2,5 mm auf. Die gesamte Messsonde 5 kann in dieser Richtung einen Durchmesser von ca. 90mm aufweisen. Die Abmessungen der Halteelemente 12a, 12b können beispielsweise 35x30x20 mm betragen.

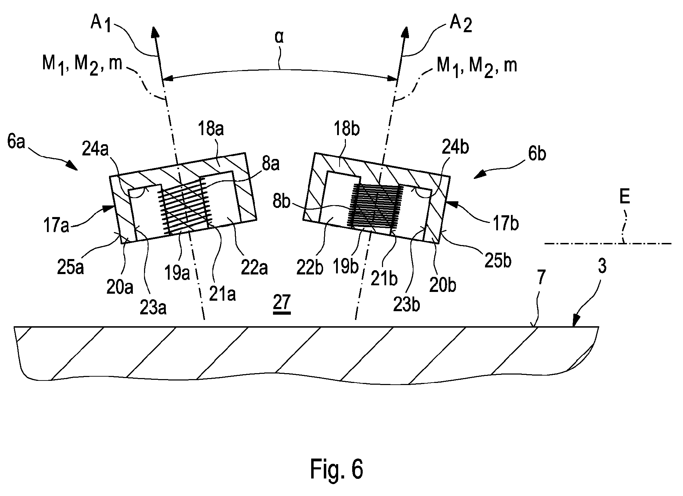

Die Figur 6 zeigt eine Variante des Beispiels der Figur 3, bei welchem die beiden Spulenelemente 6a, 6b (in Figur 6 ohne die Kipp-/Verstellvorrichtung 11 gezeigt) bezüglich der lateralen Messebene E analog zum Beispiel der Figur 3 benachbart und bezüglich der beiden axialen Richtungen A₁, A₂ verkippt zueinander angeordnet sind. Mit anderen Worten, die erste axiale Richtung A₁ bildet mit der zweiten axialen Richtung A₂ einen vorbestimmten Verkippungswinkel α aus. Der Verkippungswinkel α kann dabei wie in Figur 6 gezeigt ein spitzer Winkel sein, der vorzugsweise zwischen 0° und 45° betragen kann. Die Verstell-/Kippvorrichtung 11 kann derart ausgebildet sein, dass der Spulenabstand s bzw. der Verkippungswinkel α während der Durchführung des erfindungsgemäßen Verfahrens variiert werden kann. Denkbar ist etwa, im Zuge der Bewegung der Messsonde 5 über die Kolbenoberfläche 7 den Spulenabstand a und/oder den Verkippungswinkel α zu variieren, um auf diese Weise die Eindringtiefe der vom ersten Spulenelement 6a erzeugten elektromagnetischen Strahlung zu variieren. Auf diese Weise können Fehlstellen in unterschiedlichen Tiefenbereichen unter der Kolbenoberfläche 7 untersucht werden. Soll die Eindringtiefe des Messpunkts der elektromagnetischen Strahlung variiert werden, so ist es auch vorstellbar, während einer solchen Variation die Bewegung der Messsonde 5 temporär zu unterbrechen. Dem Fachmann eröffnen sich vielfältige Optionen, den Messvorgang entsprechend zu variieren.

Betrachtet man nun wieder die Figur 3, so erkennt man, dass jedes der beiden Spulenelemente 6a, 6b jeweils ein Schalenelement 17a, 17b - dem Fachmann auch als Ferrit-Schalenkern bekannt - mit einem zylindrisch ausgebildeten Basisteil 18a, 18b besitzt, von dem ein Mittelsteg, nachfolgend als erstes zylindrisches Ferrit--Element 19a, 19b bezeichnet, absteht. Die Öffnung der Einzelschalen zeigt in Richtung der zu prüfenden Kolbenoberfläche 7. Die Schalenelemente 17a,17b können jeweils eine Anfangspermeabilität µᵢ von ca. 450 aufweisen.

Zur Verdeutlichung zeigt die Figur 4 die elektrischen Spulenelemente 6a, 6b separat und in einer vergrößerten Darstellung. Die Figur 5 zeigt den Aufbau des Spulenelements 6a, 6b der Figur 4 in einem Querschnitt entlang der Schnittlinie V-V der Figur 4.

Wie in den Figuren 3 bis 5 gezeigt verläuft die Mittellängsachse M₁ des ersten Ferritkern-Elements 19a koaxial zur Mittellängsachse m des Basisteils 18a, 18a. Auf der Außenumfangsfläche 21 a, 21 b des ersten Ferritkern-Elements 19a, 19b ist trägerlos die erste bzw. zweite Wicklung 8a, 8b angeordnet, die vorzugsweise mehrlagig ausgebildet ist. Analog zum ersten Ferritkern-Element 19a, 19b steht vom zylindrischen Basisteil 18a, 18b auch ein hohlzylindrisches zweites Ferritkern-Element 20a, 20b ab, welches in einem Querschnitt quer zu seiner Mittellängsachse M₂ ringförmig ausgebildet ist. Auch die Mittellängsachse M₂ des ersten Ferritkern-Elements 20a, 20b verläuft koaxial zur Mittellängsachse m des Basisteils 18a, 18b. Das zweite Ferritkern-Element 20a, 20b ist radial außerhalb des ersten Ferritkern-Elements 19a, 19b angeordnet, so dass zwischen dem ersten und dem zweiten Ferritkern-Element 19a, 20a ein Zwischenraum 22a, 22b ausgebildet wird. Der Zwischenraum 22a, 22b wird in radialer Richtung r radial innen von der Außenumfangsseite 21 a, 21 b des ersten Ferritkern-Elements 19a, 19b und radial außen von einer Innenumfangsseite 23a, 23b des zweiten Ferritkern-Elements 20a, 20b begrenzt. Stirnseitig wird der Zwischenraum 22a, 22b von einer vom Basisteil 18a, 18b gebildeten Stirnseite 24a, 24b begrenzt. Gegenüber der Stirnseite 24a, 24b ist der Zwischenraum 22a, 22b zur Umgebung 27 der Spulenelemente 6a, 6b hin offen, und zwar zu der zu untersuchenden Kolbenoberfläche 7 hin.

Besonders gute Ergebnisse bei der Fehlstellen-Detektion können erzielt werden, wenn das erste Schalenelement 17a des ersten elektrischen Spulenelements 6a spaltfrei ausgebildet ist und, alternativ oder zusätzlich, das zweite Schalenelement 17b des ersten elektrischen Spulenelements 6b spaltfrei ausgebildet ist.
Eine besonders hohe Detektionsempfindlichkeit lässt sich auch erzielen, indem die beiden Spulenelemente 6a, 6b derart zueinander angeordnet sind, dass eine Außenumfangsfläche 25a des zweiten Ferritkern-Elements 20a des ersten Spulenelements 6a einer Außenumfangsfläche 25b des zweiten Ferritkern-Elements 20b des zweiten Spulenelements 6b gegenüberliegt.

Die beiden Ferritkern-Elemente 19a, 19b, 20a, 20b können integral am jeweiligen Basisteil 18a, 18b durch mechanisches Schleifen ausgeformt werden. Daraus ergibt sich eine zusätzliche Möglichkeit, Lage und Schärfe des Fokus der Messsonde einmalig fein zu justieren.

## Patentansprüche

1. Verfahren zum Detektieren von Fehlstellen in einem Kolben (3) für eine Brennkraftmaschine, umfassend die folgenden Schritte:
a) Bereitstellen des Kolbens (3) in einer Messanordnung (1), die eine, insbesondere adaptive, Messsonde (5) mit einem ersten elektrischen Spulenelement (6a) zum Erzeugen eines elektromagnetischen Wechselfeldes und einem zweiten elektrischen Spulenelement (6b) zum Detektieren eines elektromagnetischen Wechselfeldes umfasst,
b) Bewegen der Messsonde (5) über die Kolbenoberfläche (7) des Kolbens (3) hinweg, wobei in dem ersten Spulenelement (6a) ein elektrischer Wechselstrom (I₁) bereitgestellt wird, so dass ein elektromagnetisches Wechselfeld (13) erzeugt wird, welches mit dem Material des Kolbens (3) im Bereich unter der Kolbenoberfläche (7) wechselwirkt,
c) Auswerten der in dem zweiten Spulenelement (6b) vom elektromagnetischen Feld (18) nach Wechselwirkung mit dem Material des Kolbens (7) induzierten elektrischen Wechselspannung (U₂).

2. Verfahren nach Anspruch 1,
**dadurch gekennzeichnet, dass**
- für die Durchführung des Verfahrens ein erstes Spulenelement (6a) bereitgestellt wird, das eine erste Wicklung (8a) aufweist, die an einem ersten Schalenelement (17a) des ersten Spulenelements (6a) angeordnet ist,
- für die Durchführung des Verfahrens ein zweites Spulenelement (6b) bereitgestellt wird, das eine zweite Wicklung (8b) aufweist, die an einem zweiten Schalenelement (17b) des zweiten Spulenelements (6b) angeordnet ist.

3. Verfahren nach Anspruch 1 oder 2,
**dadurch gekennzeichnet, dass**
die beiden Spulenelemente (6a, 6b) im Abstand (a) zur Kolbenoberfläche (7) über diese hinweg bewegt werden, wobei der Abstand (a) vorzugsweise wenigstens 0,1 mm beträgt.

4. Verfahren nach einem der Ansprüche 1 bis 3,
**dadurch gekennzeichnet, dass**
- ein Spulenabstand (s) der beiden elektrischen Spulenelemente (6a, 6b) zueinander während der Durchführung des Verfahrens variiert wird, und/oder dass
- ein Verkippungswinkel (α) der beiden elektrischen Spulenelemente (6a, 6b) zueinander während der Durchführung des Verfahrens variiert wird.

5. Verfahren nach einem der vorhergehenden Ansprüche,
**dadurch gekennzeichnet, dass**
- das Bewegen der Messsonde (5) gemäß Schritt b) entlang eines vorbestimmten Messpfads (P) erfolgt,
- der Messpfad (P) bezüglich einer Draufsicht auf die Kolbenoberfläche (7) vorzugsweise eine meanderartige Gestalt aufweist.

6. Mess-Anordnung (1) zum Detektieren von Fehlstellen (2) in einem Kolben (3) für eine Brennkraftmaschine, insbesondere unter Durchführung des Verfahrens nach einem der vorhergehenden Ansprüche,
- mit einer Aufnahmeeinrichtung (4), in welcher der Kolben (3) zur Durchführung der Fehlstellen-Detektion aufnehmbar ist,
- mit einer Messsonde (5), die ein erstes und ein zweites elektrisches Spulenelement (6a, 6b) zum Erzeugen eines elektromagnetischen Wechselfeldes (13) und zum Detektieren des resultierenden elektromagnetischen Wechselfeldes (13) nach Wechselwirkung mit dem Kolben (3) umfasst, wobei das erste Spulenelement (6a) in einem vorbestimmten Abstand (s) und unter einem vorbestimmten Kippwinkel (α) benachbart zum zweiten Spulenelement (6b) angeordnet ist,
- mit einer Antriebseinheit (26), mittels welcher die Messsonde (5) im Abstand zur Oberfläche des Kolbens (3) entlang eines vorbestimmten Messpfads über die Kolbenoberfläche (7) hinweg bewegbar ist, wenn sich der Kolben (3) in einem in der Aufnahmevorrichtung (4) aufgenommenen Zustand befindet,
- wobei das erste elektrische Spulenelement (6a) eine erste Wicklung (8a) aufweist, die an einem ersten Schalen-Element (17a) angeordnet ist,
- wobei das zweite elektrische Spulenelement (6b) eine zweite Wicklung (8b) aufweist, die an einem zweiten Schalen-Element (17b) angeordnet ist.

7. Mess-Anordnung nach Anspruch 6,
**dadurch gekennzeichnet, dass**
- sich die erste Wicklung (8a) zylindrisch entlang einer ersten axialen Richtung (A₁) erstreckt und die zweite Wicklung (8b) sich zylindrisch entlang einer zweiten axialen Richtung (A₂) erstreckt,
- die beiden Spulenelemente (6a, 6b) benachbart und verkippt zueinander angeordnet sind, so dass die erste axialen Richtung (A₁) unter einem Verkippungswinkel (α) zur zweiten axialen Richtung (A₂) angeordnet ist.

8. Mess-Anordnung nach Anspruch 7,
**dadurch gekennzeichnet, dass**
der Verkippungswinkel (α) ein spitzer Winkel ist, der vorzugsweise zwischen 0° und 45° beträgt.

9. Mess-Anordnung nach einem der vorhergehenden Ansprüche,
**dadurch gekennzeichnet, dass**
- jedes Spulenelement (6a, 6b), insbesondere lösbar, in einem jeweiligen Halteelement (12a, 12b) aufgenommen ist,
- die beiden Halteelemente (12a, 12b), vorzugsweise mittels einer Kipp- und/oder Verstellvorichtung (11), zueinander linearverstellbar und/oder zueinander verkippbar ausgebildet sind, so dass der Abstand (s) zwischen den Spulenelementen (6a, 6b) und/oder deren Verkippungswinkel (α) zueinander variierbar sind.

10. Mess-Anordnung nach Anspruch 9,
**dadurch gekennzeichnet, dass**
die beiden Haltelemente (12a, 12b) linearverstellbar an einem gemeinsamen Grundkörper (9) der Messsonde (5) angebracht sind.

11. Mess-Anordnung nach einem der vorhergehenden Ansprüche ,
**dadurch gekennzeichnet, dass**
- das jedes der beiden Spulenelemente (6a, 6b) jeweils ein Schalenelement (17a, 17b) mit einem zylindrisch ausgebildeten Basisteil (18a, 18b) umfasst, von dem ein erstes zylindrisches Ferritkern-Element (19a, 19b) absteht, dessen Mittellängsachse (M₁) koaxial zur Mittellängsachse (m) des Basisteils (18a, 18b) verläuft und auf dessen Außenumfangsfläche (21 a, 21 b) die erste oder zweite Wicklung (8a, 8b) angeordnet ist,
- vom zylindrischen Basisteil (18a, 18b) ein hohlzylindrisches zweites Ferritkern-Element (20a, 20b) absteht, welches in einem Querschnitt quer zur Mittellängsachse (m) des Basisteils (18a, 18b) ringförmig ausgebildet ist, wobei dessen Mittellängsachse (M₂) koaxial zur Mittellängsachse (m) des Basisteils (18a, 18b) verläuft und das radial außerhalb des ersten Ferritkern-Elements (19a, 19b) angeordnet ist, so dass zwischen dem ersten und dem zweiten Ferritkern-Element (19a, 19b, 20a, 20b) ein Zwischenraum (22a, 22b) gebildet ist.
